# EUROPEAN PATENT APPLICATION

(11) **EP 4 282 736 A1**
(43) Date of publication of application: **29.11.2023**
(21) Application number: 22174875.9
(22) Date of filing: 23.05.2022
(51) Int. Cl.: B62D 25/04, E05D 15/10, E05F 15/646, E05F 15/649

(54) **PROTECTIVE SYSTEM AND VEHICLE COMPRISING A PROTECTIVE SYSTEM**

(71) Applicant: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: GUSTAVSSON, Martin, 423 53 TORSLANDA (SE); LINDVALL, Magnus, 444 41 STENUNGSUND (SE); BERGHOFF, Christopher, 417 22 GÖTEBORG (SE)
(74) Representative: Zacco Sweden AB

(57) **Abstract**

A protective system for protecting a door drive unit of a vehicle, where the door drive unit is attached to a vehicle body structure and connected to a vehicle door. The door drive unit is configured for displacing the vehicle door relative to the vehicle body structure between a closed door position and open door positions. The protective system comprises a protective cover structure attached to the vehicle body structure, and the protective cover structure is arranged as a protective barrier between the door drive unit and an exterior vehicle structure. The protective cover structure is configured for preventing objects from impacting the door drive unit in a vehicle impact event.

## Description

### TECHNICAL FIELD

The present disclosure relates to a protective system for protecting a door drive unit of a vehicle. The disclosure further relates to a vehicle comprising a protective system for protecting a door drive unit.

### BACKGROUND

Opening of vehicle doors after a vehicle impact event may be crucial for occupants of the vehicle. In case of certain crash load cases, such as for example in certain full frontal vehicle impact events, the functionality and operability of the doors must be guaranteed so that the occupants can leave the impacted vehicle. For conventional vehicles where the vehicle doors are attached to the vehicle body structure with hinges, the vehicle is designed for low deformations behind the A-pillar for these crash load cases to enable the functionality and operability of the doors via the hinges. In some modern vehicle door solutions, traditional vehicle door constructions with hinges are not used anymore. Instead, the vehicle doors are arranged as sliding doors that are operated via arm structures driven by door drive units, such as for example electric motors. In a vehicle impact event, the functionality of the door drive units must be secured in order to enable opening of the vehicle doors.

There is thus a need for an improved vehicle door solution, where vehicle doors driven by door drive units can be opened after a vehicle impact event.

### SUMMARY

An object of the present disclosure is to provide a protective system for protecting a door drive unit of a vehicle and a vehicle comprising a protective system where the previously mentioned problems are avoided. This object is at least partly achieved by the features of the independent claims. The dependent claims contain further developments of the protective system for protecting a door drive unit of a vehicle.

The disclosure concerns a protective system for protecting a door drive unit of a vehicle, where the door drive unit is attached to a vehicle body structure and connected to a vehicle door. The door drive unit is configured for displacing the vehicle door relative to the vehicle body structure between a closed door position and open door positions. The protective system comprises a protective cover structure attached to the vehicle body structure, and the protective cover structure is arranged as a protective barrier between the door drive unit and an exterior vehicle structure. The protective cover structure is configured for preventing objects from impacting the door drive unit in a vehicle impact event.

Advantages with these features are that the protective system with the protective cover structure is preventing objects from impacting the door drive unit in a vehicle impact event, and in this way the functionality of the door drive unit is secured to enable opening of the vehicle doors after the vehicle impact event. As an example, the vehicle door may be arranged with a manual handle inside the vehicle, and by operating the manual handle the door drive unit is actuated in emergency cases for opening the doors. The door drive unit may comprise an electric motor that is used for opening and closing the vehicle door in normal operating conditions of the vehicle as well as in emergency cases. The protective system is a safety feature of the vehicle that is protecting the door drive unit from being deformed in a vehicle impact event. The protective cover structure is designed with a rigid construction that is blocking objects from impacting the door drive unit, and the objects may for example be deflected away from the door drive unit. It may also be possible to open the doors manually after a vehicle impact event if loss of electricity is occurring. The functionality of the door drive unit is efficiently maintained through the arrangement of the protective system.

In one embodiment, the protective system is arranged as an energy absorbing barrier structure configured for absorbing energy from moving objects through deformation of the protective cover structure when impacted by the moving objects in a vehicle impact event. In this way, the protective system is deformed instead of the door drive unit for a maintained functionality of the door drive unit.

In one embodiment, the exterior vehicle structure is a wheel housing separating a vehicle wheel from an interior vehicle structure. The protective cover structure is configured for preventing the vehicle wheel from impacting the door drive unit in a vehicle impact event.

In one embodiment, the protective cover structure and the door drive unit are attached to the vehicle body structure in a lower area of an A-pillar or in a lower area of a C-pillar. It should be understood that the protective cover structure in other embodiments may be arranged at any position of the vehicle, where a door drive unit is located.

In one embodiment, the door drive unit comprises a drive shaft. The drive shaft is connected to an arm structure of the vehicle door, and the arm structure is connecting the vehicle door to the vehicle body structure via the door drive unit. The arm structure is configured for displacing the vehicle door between the closed door position and open door positions upon actuation of the door drive unit. The protective cover structure is extending between the drive shaft and the exterior vehicle structure and is configured for preventing objects from impacting the drive shaft in a vehicle impact event. The drive shaft is an important part of the door drive unit that is enabling the opening and closing operations of the vehicle door. The protective cover structure is through the extension between the drive shaft and the exterior vehicle structure efficiently preventing objects from impacting the drive shaft in a vehicle impact event, which is enabling the functionality of the door drive unit after the vehicle impact event.

In one embodiment, the vehicle door is arranged as a sliding door. With sliding vehicle door is meant any type of vehicle door that is connected to the vehicle body structure via a movable arm structure, where the arm structure is pivoting relative to the vehicle door via pivoting joints allowing a displacement of the vehicle door in a longitudinal direction relative to the vehicle body structure, or allowing a combined displacement of the vehicle door in a longitudinal direction and a lateral direction relative to the vehicle body structure. As an example, the vehicle door may have a swiping movement when being displaced between open and closed door positions.

In one embodiment, the protective cover structure is made of an extruded aluminium structure. The use of an extruded aluminium structure is enabling a protective cover structure that is arranged as a rigid constructional element made of a material with high strength, which also is simple to manufacture. The protective cover structure may be attached to the vehicle body with a suitable attachment method, such as spot welding, laser welding, arc welding, or alternatively with suitable fastening means, such as bolts or rivets, for a rigid connection. In other embodiments, the protective structure may be made of steel, plastic materials, or composite materials.

In one embodiment, the door drive unit comprises an electric motor. The use of an electric motor is providing a simple and efficient operation of the door drive unit, where the drive shaft is rotated by the electric motor upon operation of the door drive unit. The door drive unit may further comprise a gear unit that suitably is arranged as a part of, or an extension of, the drive shaft.

In one embodiment, the protective system further comprises a protective plate structure attached to the protective cover structure. The protective plate structure is arranged between the protective cover structure and the exterior vehicle structure. The protective plate structure is increasing the strength of the protective system, and the protective plate structure is together with the protective cover structure arranged as a protective barrier between the door drive unit and an exterior vehicle structure. The protective plate structure and the protective cover structure are through the structural construction configured for preventing objects from impacting the door drive unit in a vehicle impact event.

In one embodiment, the protective plate structure is arranged as a fire protection barrier between the door drive unit and the exterior vehicle structure. This is further increasing the safety of the protective system.

In one embodiment, the protective cover structure is extending in a longitudinal direction, a lateral direction and a vertical direction of the vehicle. The protective cover structure is attached to the vehicle body structure at a lateral inner side, and the protective cover structure is extending in the lateral direction from the lateral inner side to a lateral outer side.

In one embodiment, the protective cover structure comprises an upper structural section extending in the lateral direction between the lateral inner side and the lateral outer side. The protective cover structure comprises a lower structural section extending in the lateral direction between the lateral inner side and the lateral outer side.

In one embodiment, the upper structural section is extending in the longitudinal direction between a longitudinal inner side and a longitudinal outer side. The lower structural section is extending in the longitudinal direction between a longitudinal inner side and a longitudinal outer side.

In one embodiment, the protective cover structure comprises an opening arranged between the upper structural section and the lower structural section. The opening is configured for receiving a structural part of the door drive unit extending in the longitudinal direction. By arranging the structural part of the door drive unit within the opening, the packaging space of the vehicle door system and the door drive unit can be improved in a simple and efficient way.

In one embodiment, the door drive unit is positioned at least partly within a space of the protective cover structure. The space is formed between the upper structural section and the lower structural section, and the opening arranged between the upper structural section and the lower structural section is providing access to the space. The structural part of the door drive unit may partly extend into the space via the opening for a compact layout of the door drive unit and the protective system.

The disclosure further concerns a vehicle comprising a protective system as described above.

### BRIEF DESCRIPTION OF DRAWINGS

The disclosure will be described in detail in the following, with reference to the attached drawings, in which
- Fig. 1: shows schematically, in a side view, a vehicle comprising a protective system for protecting a door drive unit and a door drive unit connected to an arm structure, according to the disclosure,
- Fig. 2: shows schematically, in a perspective view, a section of the vehicle comprising the protective system and the door drive unit connected to the arm structure, according to the disclosure,
- Fig. 3: shows schematically, in a side view, the protective system and the door drive unit connected to the arm structure, according to the disclosure,
- Fig. 4: shows schematically, in a view from above, the protective system and the door drive unit connected to the arm structure, according to the disclosure,
- Fig. 5: shows schematically, in a perspective view, the protective system and the door drive unit connected to the arm structure, according to the disclosure, and
- Fig. 6: shows schematically, in a perspective view, a protective cover structure of the protective system, according to the disclosure.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

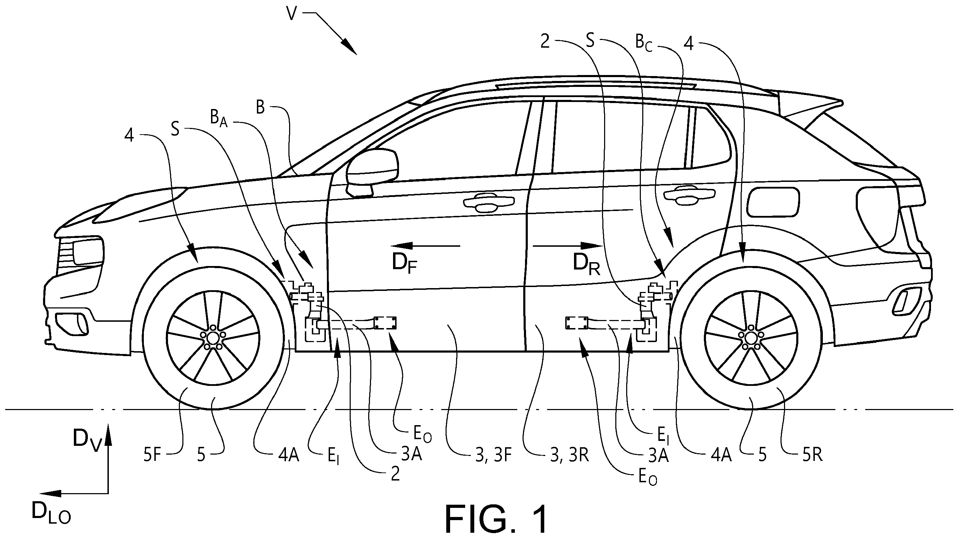

Figure 1 schematically shows a vehicle V with vehicle doors 3, where the vehicle doors 3 are movably arranged relative to a vehicle body structure B of the vehicle V. In figure 1, two side doors on a left side of the vehicle V are schematically illustrated, and it should be understood that the vehicle V further comprises two side doors on a right side of the vehicle V with the same configuration. The vehicle doors 3 can each be displaced between a closed door position and open door positions in any suitable manner. In the closed door position, access to an interior compartment of the vehicle V via a door opening in the vehicle body structure B is prevented, and in the open door positions, access to the interior compartment of the vehicle V via the door opening in the vehicle body structure B is enabled. In figure 1, the vehicle doors 3 are shown in closed door positions for illustrative purposes.

In the embodiment illustrated in figure 1, the vehicle doors 3 are arranged as sliding vehicle doors 3. A front vehicle door 3F of the vehicle V is moved in a forwards direction D_{F} when displaced from the closed door position to an open door position, as indicated with the arrow in figure 1. A rear vehicle door 3F of the vehicle V is moved in a rearwards direction D_{R} when displaced from the closed door position to an open door position, as indicated with the arrow in figure 1. Each vehicle door 3 comprises an arm structure 3a, and the arm structure 3a is connecting the vehicle door 3 to the vehicle body structure B. It should be understood that the term sliding vehicle door for all embodiments is defined as any type of vehicle door 3 that is connected to a vehicle body structure B via a movable arm structure 3a, where the arm structure 3a is pivoting relative to the vehicle door 3 via pivoting joints allowing a displacement of the vehicle door in a longitudinal direction D_{LO} relative to the vehicle body structure B, or allowing a combined displacement of the vehicle door in a longitudinal direction D_{LO} and a lateral direction D_{LA} relative to the vehicle body structure B. Each vehicle door may be arranged with more than one arm structure if suitable, depending on the vehicle door design and construction.

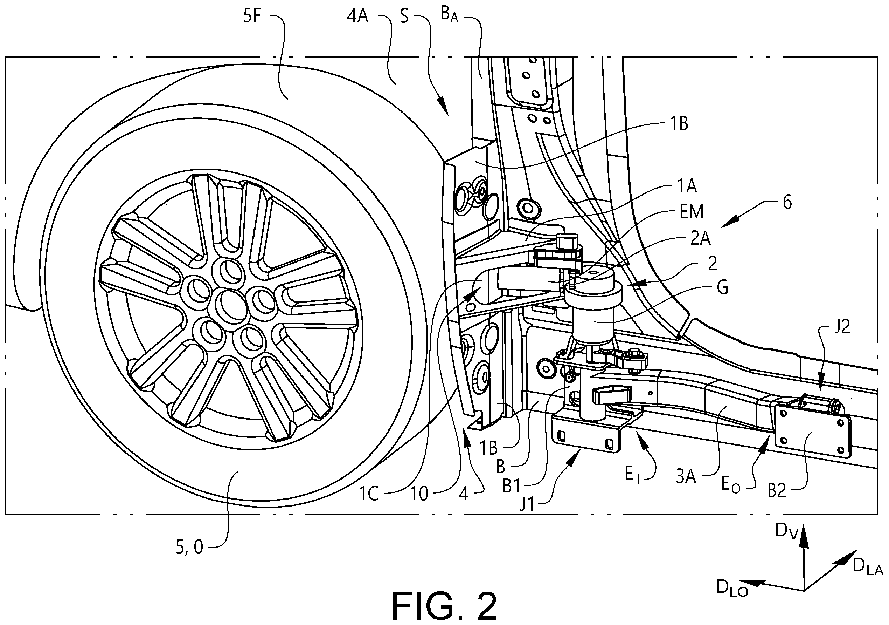

As shown in for example figures 1 and 2, an inner end E_{I} of the arm structure 3a is connected to a lower part of the vehicle body structure B via a first pivoting joint J1, allowing the arm structure 3a to pivot relative to the vehicle body structure B upon opening and closing the vehicle door 3. An outer end Eo of the arm structure 3a is further connected to a lower part of the vehicle door 3 via a second pivoting joint J2, allowing the arm structure 3a to pivot relative to the vehicle door 3 upon opening and closing the vehicle door 3. The respective joints may be arranged with brackets of other suitable attachment means for connecting the arm structure 3a to the vehicle body structure B and the vehicle door 3. In the illustrated embodiment, the first pivoting joint J1 is connected to the vehicle body structure B via a first bracket B1 and the second pivoting joint J2 is connected to the vehicle door 3 via a second bracket B2.

With the described arrangement, each arm structure 3a is allowed to rotate relative to the vehicle body structure B via the first pivoting joint J1 and to rotate relative to the vehicle door 3 via the second pivoting joint J2 for an efficient displacement of the vehicle door 3 relative to the vehicle body structure B during door opening and closing operations. The arm structures 3a may have any suitable shape or configuration, and in the illustrated embodiment, the arm structures 3a are rotating in a horizontal plane, or essentially in a horizontal plane, when opening and closing the vehicle door 3. In the illustrated embodiment, each arm structure 3a is thus arranged as a lower arm for holding and displacing the vehicle door 3 relative to the vehicle body structure B, and each arm structure 3a is therefore suitably connected to a lower part of the vehicle body structure B. The vehicle door 3 may further have an additional lower arm structure and/or an upper arm structure or similar arrangement for enabling the movable connection between the vehicle door 3 and the vehicle body structure B.

The vehicle V further comprises a protective system S for protecting a door drive unit 2 of the vehicle V. As shown in figure 1, the vehicle V comprises a protective system S arranged in connection to the front door 3F, where the protective system S is protecting the door drive unit 2 operating the front door 3F of the vehicle V. The vehicle V further comprises a protective system S arranged in connection to the rear door 3R, where the protective system S is protecting the door drive unit 2 operating the rear door 3R of the vehicle V. It should be understood that the vehicle V may be arranged with protective systems S in connection to any vehicle door for protecting a door drive unit operating the vehicle door. In the following, the protective system S is described more in detail for a door drive unit 2 arranged in connection to a front left vehicle door as illustrated in figure 2, but the disclosure is equally applicable on other vehicle doors.

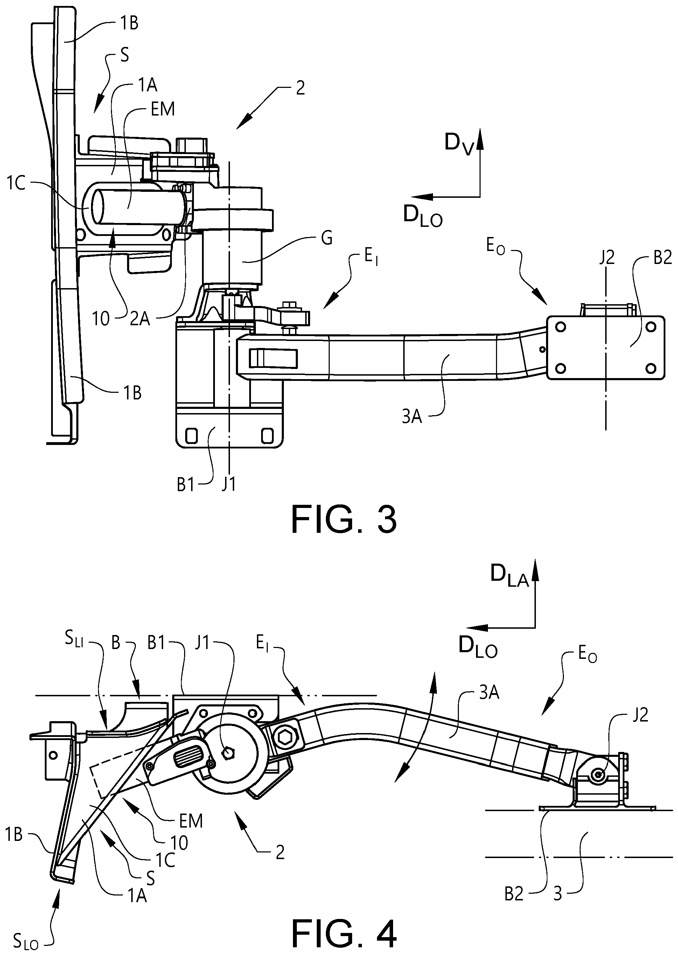

The door drive unit 2 is attached to the vehicle body structure B in connection to the first pivot joint J1, and the door drive unit 2 is further connected to the vehicle door 3 via the arm structure 3a and the second pivot joint J2, as shown in for example figure 4. The door drive unit 2 is configured for displacing the vehicle door 3 relative to the vehicle body structure B between the closed and open door positions via the arm structure 3a. The door drive unit 2 suitably comprises an electric motor EM that is configured for displacing the vehicle door 3 relative to the vehicle body structure B.

The door drive unit 2 further comprises a drive shaft 2a that is connected to the inner end E_{I} of the arm structure 3a, as understood from for example figure 2. The drive shaft 2a is connected to the electric motor EM and the drive shaft 2a is used for displacing the arm structure 3a relative to the vehicle body B upon operation of the electric motor EM. The drive shaft 2a suitably comprises a gear unit G that is connected to the inner end E_{I} of the arm structure 3a for controlling the movement of the arm structure 3a. The gear unit G is suitably arranged as a part of or an extension of the drive shaft 2a. The door drive unit 2 with the drive shaft 2a is forming the first pivot joint J1, as understood from for example figure 2, and the door drive unit 2 with the drive shaft 2a is displacing the arm structure 3a through the gear unit G upon operation of the door drive unit 2. In this way, the arm structure 3a is operably connecting the vehicle door 3 to the vehicle body structure B via the door drive unit 2 comprising the drive shaft 2a. The arm structure 3a is thus configured for displacing the vehicle door 3 between the closed door position and open door positions upon operation of the door drive unit 2. The door drive unit 2 may be connected to a control unit that is controlling the operation of the door drive unit 2. The vehicle door 3 may be arranged with buttons, handles or similar devices for initiating the operation of the door drive unit 2 for opening and closing the vehicle door 3.

The protective system S comprises a protective cover structure 1a attached to the vehicle body structure B. The protective cover structure 1a is arranged as a protective barrier between the door drive unit 2 and an exterior vehicle structure 4, as understood from for example figure 2, and the protective cover structure 1a is through its structural construction configured for preventing objects O from impacting the door drive unit 2 in a vehicle impact event.

As shown in figure 1, the protective cover structure 1a and the door drive unit 2 are attached to the vehicle body structure B in a lower area of an A-pillar B_{A} in connection to the front vehicle door 3F. Further, the protective cover structure 1a and the door drive unit 2 are attached to the vehicle body structure B in a lower area of a C-pillar B_{C} in connection to the rear vehicle door 3R. As described above, the protective system S is described more in detail for a door drive unit 2 arranged in connection to a front left vehicle door as illustrated in figure 2, but the disclosure is equally applicable on other vehicle doors.

In the illustrated embodiment, the protective cover structure 1a is extending between the drive shaft 2a and the exterior vehicle structure 4 and the protective cover structure 1a is in this way configured for preventing objects O from impacting the drive shaft 2a in a vehicle impact event. The object O may be any type of object that could impact the door drive unit 2 in a vehicle impact event, such as an external object or an object of the vehicle V that upon deformation of the vehicle V is forced towards the door drive unit 2. As an example, the object O may be a vehicle wheel 5 of the vehicle V that is pushed towards the door drive unit in a vehicle impact event. In a frontal vehicle impact event, the front wheel 5F of the vehicle V may be pushed towards the door drive unit 2 connected to the front vehicle door 3F. In a rear-end vehicle impact event, the rear wheel 5R of the vehicle V may be pushed towards the door drive unit 2 connected to the rear vehicle door 3R.

In the embodiment illustrated in figures 1 and 2, the exterior vehicle structure 4 is a wheel housing 4a separating the vehicle wheel 5 from an interior vehicle structure 6. The protective cover structure 1a is configured for preventing the vehicle wheel 5 or any other object O from impacting the door drive unit 2 in a vehicle impact event. The protective system S is arranged as an energy absorbing barrier structure configured for absorbing energy from moving objects O through deformation of the protective cover structure 1a when impacted by the moving objects O in a vehicle impact event. The protective cover structure 1a is arranged as a rigid constructional element made of a material with high strength, such as steel or aluminium. In one embodiment, the protective cover structure 1a is made of an extruded aluminium structure. In alternative embodiments, the protective cover structure 1a may be made of plastic materials or composite materials. The protective cover structure 1a is attached to the vehicle body B with a suitable attachment method, such as spot welding, laser welding, arc welding, or alternatively with suitable fastening means, such as bolts or rivets.

The protective cover structure 1a is shown more in detail in figures 3 to 6. As understood from the figures, the protective cover structure 1a is extending in a longitudinal direction D_{LO}, a lateral direction D_{LA} and a vertical direction Dv of the vehicle V. The protective cover structure 1a is attached to the vehicle body structure B at a lateral inner side S_{LI}, and the lateral inner side S_{LI} may be arranged with flanges or other suitable surfaces for attaching the protective cover structure 1a to the vehicle body structure B. The protective cover structure 1a is extending in the lateral direction from the lateral inner side S_{LI} to a lateral outer side S_{LO}. The protective cover structure 1a comprises an upper structural section 7a extending in the lateral direction D_{LA} between the lateral inner side S_{LI} and the lateral outer side S_{LO}. The protective cover structure 1a further comprises a lower structural section 7b extending in the lateral direction D_{LA} between the lateral inner side S_{LI} and the lateral outer side S_{LO}. The upper structural section 7a and the lower structural section 7b are having extensions in the longitudinal direction D_{LO} as understood from the figures for providing a strong structural component that is protecting the door drive unit 2. The upper structural section 7a is extending in the longitudinal direction D_{LO} between a longitudinal inner side 8a and a longitudinal outer side 9a. The lower structural section 7b is extending in the longitudinal direction D_{LO} between a longitudinal inner side 8b and a longitudinal outer side 9b.

As illustrated in figures 2 to 6, the protective cover structure 1a comprises an opening 10 arranged between the upper structural section 7a and the lower structural section 7b. As shown in figures 2 to 5, the opening 10 is configured for receiving a structural part of the door drive unit 2. The structural part of the door drive unit 2 is extending in the longitudinal direction D_{LO}. The structural part may for example be formed of the electric motor EM, as shown in the figures, or another structural part of the door drive unit 2. By arranging the structural part of the door drive unit 2 within the opening 10, the packaging space of the vehicle door system and the door drive unit 2 can be improved in a simple and efficient way. In this way, the door drive unit 2 is positioned at least partly within a space 1c of the protective cover structure 1a. The space 1c is formed between the upper structural section 7a and the lower structural section 7b, and the opening 10 arranged between the upper structural section 7a and the lower structural section 7b is providing access to the space 1c. As shown in the figures, the structural part of the door drive unit 2, such as the electric motor EM, is partly extending into the space 1c via the opening 10 for a compact layout of the door drive unit 2 and the protective system S.

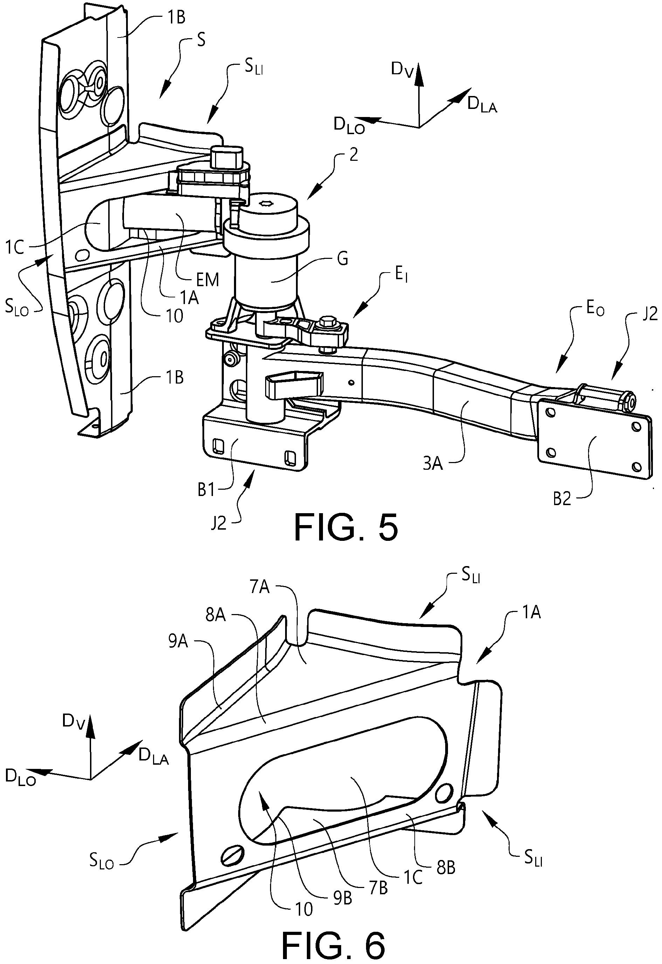

In the illustrated embodiment, the protective system S further comprises a protective plate structure 1b attached to the protective cover structure 1a. The protective plate structure 1b is arranged between the protective cover structure 1a and the exterior vehicle structure 4, as shown in figure 2. The protective plate structure 1b is shown more in detail in figures 3 to 5. The protective plate structure 1b is arranged as a fire protection barrier between the door drive unit 2 and the exterior vehicle structure 4. The protective plate structure 1b is configured as a blocking screen that is preventing a fire that may occur during a vehicle impact event from being spread into the interior compartment of the vehicle V. The protective plate structure 1b is also increasing the strength of the protective system, and the protective plate structure 1b is together with the protective cover structure 1a arranged as a protective barrier between the door drive unit 2 and an exterior vehicle structure 4. The protective plate structure 1b and the protective cover structure 1a are through the structural construction configured for preventing objects O from impacting the door drive unit 2 in a vehicle impact event. In the illustrated embodiment, the protective plate structure 1b is having a plate-like structural configuration with an extension mainly in the vertical direction Dv and lateral direction D_{LA}, as understood from for example figure 2. The longitudinal outer side 9a of the upper structural section 7a and the longitudinal outer side 9b of the lower structural section 7b may be arranged with flanges or other suitable surfaces for attaching the protective plate structure 1b to the protective cover structure 1a, as shown for example in figure 6.

The protective plate structure 1b may be arranged as a rigid constructional element made of a material with high strength, such as steel or aluminium. In one embodiment, the protective plate structure 1b is made of an extruded aluminium structure. In alternative embodiments, the protective plate structure 1b may be made of plastic materials or composite materials.

It should be understood that the protective system may be arranged without the protective plate structure 1b, depending on the design and construction of the vehicle V.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

### REFERENCE SIGNS

- 1a:: Protective cover structure
- 1b:: Protective plate structure
- 1c:: Space
- 2:: Door drive unit
- 2a:: Drive shaft
- 3:: Vehicle door
- 3a:: Arm structure
- 4:: Exterior vehicle structure
- 4a:: Wheel housing
- 5:: Vehicle wheel
- 6:: Interior vehicle structure
- 7a:: Upper structural section
- 7b:: Lower structural section
- 8a:: Longitudinal inner side, Upper structural section
- 8b:: Longitudinal inner side, Lower structural section
- 9a:: Longitudinal outer side, Upper structural section
- 9b:: Longitudinal outer side, Lower structural section
- 10:: Opening

- B:: Vehicle body structure
- B_{A}:: A-pillar
- B_{C}:: C-pillar
- D:: Vehicle door
- D_{F}:: Forwards direction
- D_{LA}:: Lateral direction
- D_{LO}:: Longitudinal direction
- D_{R}:: Rearwards direction
- D_{V}:: Vertical direction
- E_{I}:: Inner end
- E_{O}:: Outer end
- EM:: Electric motor
- J1:: First pivoting joint
- J2:: Second pivoting joint
- O:: Object
- V:: Vehicle
- S:: Protective system
- S_{LI}:: Lateral inner side
- S_{LO}:: Lateral outer side

## Claims

1. A protective system (S) for protecting a door drive unit (2) of a vehicle (V), wherein the door drive unit (2) is attached to a vehicle body structure (B) and connected to a vehicle door (3), wherein the door drive unit (2) is configured for displacing the vehicle door (3) relative to the vehicle body structure (B) between a closed door position and open door positions,
wherein the protective system (S) comprises a protective cover structure (1a) attached to the vehicle body structure (B), wherein the protective cover structure (1a) is arranged as a protective barrier between the door drive unit (2) and an exterior vehicle structure (4), wherein the protective cover structure (1a) is configured for preventing objects (O) from impacting the door drive unit (2) in a vehicle impact event.

2. The protective system (S) according to claim 1,
wherein the protective system (S) is arranged as an energy absorbing barrier structure configured for absorbing energy from moving objects (O) through deformation of the protective cover structure (1a) when impacted by the moving objects (O) in a vehicle impact event.

3. The protective system (S) according to claim 1 or 2,
wherein the exterior vehicle structure (4) is a wheel housing (4a) separating a vehicle wheel (5) from an interior vehicle structure (6), wherein the protective cover structure (1a) is configured for preventing the vehicle wheel (5) from impacting the door drive unit (2) in a vehicle impact event.

4. The protective system (S) according to any preceding claim,
wherein the protective cover structure (1a) and the door drive unit (2) are attached to the vehicle body structure (B) in a lower area of an A-pillar (B_{A}) or in a lower area of a C-pillar (Bc).

5. The protective system (S) according to any preceding claim,
wherein the door drive unit (2) comprises a drive shaft (2a), wherein the drive shaft (2a) is connected to an arm structure (3a) of the vehicle door (3), wherein the arm structure (3a) is connecting the vehicle door (3) to the vehicle body structure (B) via the door drive unit (2), wherein the arm structure (3a) is configured for displacing the vehicle door (3) between the closed door position and open door positions upon actuation of the door drive unit (2), wherein the protective cover structure (1a) is extending between the drive shaft (2a) and the exterior vehicle structure (4) and is configured for preventing objects (O) from impacting the drive shaft (2a) in a vehicle impact event.

6. The protective system (S) according to any preceding claim,
wherein the vehicle door (3) is arranged as a sliding door.

7. The protective system (S) according to any preceding claim,
wherein the protective cover structure (1a) is made of an extruded aluminium structure.

8. The protective system (S) according to any preceding claim,
wherein the door drive unit (2) comprises an electric motor (EM).

9. The protective system (S) according to any preceding claim,
wherein the protective system (S) further comprises a protective plate structure (1b) attached to the protective cover structure (1a), wherein the protective plate structure (1b) is arranged between the protective cover structure (1a) and the exterior vehicle structure (4).

10. The protective system (S) according to any preceding claim,
wherein the protective plate structure (1b) is arranged as a fire protection barrier between the door drive unit (2) and the exterior vehicle structure (4).

11. The protective system (S) according to any preceding claim,
wherein the protective cover structure (1a) is extending in a longitudinal direction (D_{LO}), a lateral direction (D_{LA}) and a vertical direction (D_{V}) of the vehicle (V), wherein the protective cover structure (1a) is attached to the vehicle body structure (B) at a lateral inner side (S_{LI}), wherein the protective cover structure (1a) is extending in the lateral direction from the lateral inner side (S_{LI}) to a lateral outer side (S_{LO}).

12. The protective system (S) according to claim 11,
wherein the protective cover structure (1a) comprises an upper structural section (7a) extending in the lateral direction (D_{LA}) between the lateral inner side (S_{LI}) and the lateral outer side (S_{LO}), and wherein the protective cover structure (1a) comprises a lower structural section (7b) extending in the lateral direction (D_{LA}) between the lateral inner side (S_{LI}) and the lateral outer side (S_{LO}).

13. The protective system (S) according to claim 12,
wherein the upper structural section (7a) is extending in the longitudinal direction (D_{LO}) between a longitudinal inner side (8a) and a longitudinal outer side (9a), and wherein the lower structural section (7b) is extending in the longitudinal direction (D_{LO}) between a longitudinal inner side (8b) and a longitudinal outer side (9b).

14. The protective system (S) according to claim 12 or 13,
wherein the protective cover structure (1a) comprises an opening (10) arranged between the upper structural section (7a) and the lower structural section (7b), wherein the opening (10) is configured for receiving a structural part of the door drive unit (2) extending in the longitudinal direction (D_{LO}).

15. The protective system (S) according to any preceding claim,
wherein the door drive unit (2) is positioned at least partly within a space (1c) of the protective cover structure (1a).

16. A vehicle (V) comprising a protective system (S) according to any of claims 1-15.
